(19) Europäisches Patentamt
European Patent Office
Office européen des brevets

(11) **EP 4 431 465 A1**

(12) **EUROPEAN PATENT APPLICATION**
published in accordance with Art. 153(4) EPC

(43) Date of publication:
**18.09.2024 Bulletin 2024/38**

(21) Application number: **22892403.1**

(22) Date of filing: **13.09.2022**

(51) International Patent Classification (IPC):
**C02F 1/44** (2023.01)          **B01D 61/02** (2006.01)
**B01D 61/08** (2006.01)          **B01D 61/58** (2006.01)

(52) Cooperative Patent Classification (CPC):
**B01D 61/02; B01D 61/08; B01D 61/58; C02F 1/44;**
Y02A 20/131

(86) International application number:
**PCT/JP2022/034165**

(87) International publication number:
**WO 2023/084902 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2021 JP 2021182541**

(71) Applicant: **Kurita Water Industries Ltd.
Tokyo 164-0001 (JP)**

(72) Inventors:
• **MINATO, Yasuharu**
  **Tokyo 164-0001 (JP)**
• **NOMURA, Yuki**
  **Tokyo 164-0001 (JP)**
• **ABE, Kouya**
  **Tokyo 164-0001 (JP)**

(74) Representative: **TBK
Bavariaring 4-6
80336 München (DE)**

(54) **MULTI-STAGE REVERSE OSMOSIS MEMBRANE TREATMENT SYSTEM**

(57)    A pure-water production apparatus 1 comprises a retention tank 2 for retaining water WO being treated, and water-flow piping 3 connected to the retention tank 2, the water-flow piping 3 being provided, in the following order, a liquid-sending pump 4, a second reverse osmosis membrane 5 for which the permeation flux per 1 MPa of effective pressure is 0.8 $m^3/(m^2 \cdot day)$ or greater, a first reverse osmosis membrane 6 for which the permeation flux per 1 MPa of effective pressure is 2.0 $m^3/(m^2 \cdot day)$ or greater, and an ion exchange device 7. An NaOH aqueous solution addition means 8 is connected at a stage preceding the first reverse osmosis membrane 6, it being possible for the amount of NaOH aqueous solution added to be controlled by a control mechanism in accordance with the flow rate of the water-flow piping 3 and the pH of the water WO being treated, such that water being treated by the first reverse osmosis membrane 6 reaches a prescribed pH. A multi-stage reverse osmosis membrane treatment system is composed of the second reverse osmosis membrane 5, the first reverse osmosis membrane 6, and the NaOH aqueous solution addition means 8. Using such a multi-stage reverse osmosis membrane treatment system makes it possible to obtain treated water having a prescribed level of quality while reducing the energy needed for operation.

FIG. 1

**Description**

Technical Field

The disclosure relates to a multi-stage reverse osmosis membrane treatment system, and particularly, to a multi-stage reverse osmosis membrane treatment system that makes it possible to obtain treated water having a predetermined level of water quality while reducing operational energy.

Related Art

Conventionally, pure water, such as ultra-pure water from which organic matter, ionic components, fine particles, bacteria or the like have been highly removed, has been used as cleaning water or the like in a semiconductor device manufacturing process or a liquid crystal display device manufacturing process. For the production of such pure water, due to its high versatility and capability to easily achieve predetermined water quality, a pure water production apparatus is used in which an ion exchange device is arranged in a subsequent stage of a multi-stage reverse osmosis membrane treatment system having two or more stages of reverse osmosis membranes (RO membranes) connected in series. However, reverse osmosis membranes consume a lot of power and thus are not necessarily suitable for meeting the recent demand for energy saving.

There are reverse osmosis membranes having various abilities depending on their respective membrane surface effective pressures or fluxes or the like, and attempts have been made to combine the reverse osmosis membranes having different abilities. For example, Patent Document 1 proposes a reverse osmosis membrane treatment system including: a first reverse osmosis membrane treatment means, in which water to be treated is passed through a first reverse osmosis membrane to obtain first permeated water and first concentrated water; and a second reverse osmosis membrane treatment means, in which at least the first permeated water is passed through a second reverse osmosis membrane to obtain second permeated water and second concentrated water. A flux per 1 MPa of effective pressure of the second reverse osmosis membrane is less than a flux per 1 MPa of effective pressure of the first reverse osmosis membrane, and the flux per 1 MPa of effective pressure of the second reverse osmosis membrane is 0.5 $m^3/m^2/d$ or less.

Prior-Art Documents

Patent Documents

Patent Document 1: Japanese Patent Laid-open No. 2018-79451

SUMMARY OF THE INVENTION

Problems to Be Solved by the Invention

However, the reverse osmosis membrane treatment system described in Patent Document 1 aims to improve water quality by removing isopropyl alcohol (IPA) from the permeated water, and has a problem that its effect of reducing operational energy is small. Thus, it is conceivable to combine and use the reverse osmosis membranes that require less operational energy. However, in that case, a problem arises that it is difficult to obtain treated water from which weakly acidic ion species such as boron or silica have been sufficiently removed.

Thus, conventionally, a reverse osmosis membrane treatment system in which weakly acidic ion species such as boron or silica can be sufficiently removed while operational energy is reduced, that is, a reverse osmosis membrane treatment system which is reduced in operational energy and improved in water quality, has not been present.

The disclosure has been made in view of the above problems, and aims to provide a multi-stage reverse osmosis membrane treatment system that makes it possible to obtain treated water having a predetermined level of water quality while reducing operational energy.

Means for Solving the Problems

In view of the above object, the disclosure provides a multi-stage reverse osmosis membrane treatment system in which two or more stages of reverse osmosis membranes are arranged in series. In the multi-stage reverse osmosis membrane treatment system, at least one of the two or more stages of reverse osmosis membranes is a reverse osmosis membrane (hereinafter first reverse osmosis membrane) having a flux of 2.0 $m^3/(m^2 \cdot day)$ or more per 1 MPa (water temperature: 25 °C; pure water (RO permeated water)) of membrane surface effective pressure. The pH of water to be treated by the first reverse osmosis membrane is adjusted to the alkaline side for treatment.

According to this invention (Invention 1), in a pure water production system equipped with an ion exchange device, weakly acidic ion species such as boron or silica derived from the supplied water are difficult to remove using the ion exchange device, and leakage of boron or silica is likely to occur. Thus, multiple stages of reverse osmosis membranes are provided prior to the ion exchange device. However, consequently, operational energy of the pure water production system may be increased. Thus, in Invention 1, by using a reverse osmosis membrane (first reverse osmosis membrane) having a large flux per 1 MPa of membrane surface effective pressure (a small membrane surface effective pressure at the same flux), it is possible to reduce the operational energy significantly (for example, by 20% or more) compared to the case where a multi-stage reverse osmosis membrane treatment system is composed of only a reverse osmosis membrane having a smaller flux. By adjusting the pH of water supplied to (water to be treated by) the first reverse osmosis membrane to the alkaline side, a removal rate for boron or silica can be maintained at or above a predetermined level. Accordingly, it is possible to reduce the operational energy while maintaining water quality.

In the above invention (Invention 1), preferably, two stages of the first reverse osmosis membrane are arranged in series, and the pH of the water to be treated by any of the first reverse osmosis membranes is adjusted to the alkaline side for treatment (Invention 2).

According to this invention (Invention 2), by configuring the multi-stage reverse osmosis membrane treatment system by connecting, in series, two stages of the first reverse osmosis membrane having a low membrane surface effective pressure, the operational energy can further be reduced.

In the above invention (Invention 1), a reverse osmosis membrane (hereinafter second reverse osmosis membrane) having a flux of 0.8 m$^3$/(m$^2$·day) or more per 1 MPa (water temperature: 25 °C; pure water (RO permeated water)) of membrane surface effective pressure and the first reverse osmosis membrane may be arranged in series, and the pH of the water to be treated by the first reverse osmosis membrane may be adjusted to the alkaline side for treatment (Invention 3).

According to the above invention (Invention 3), by combining the first reverse osmosis membrane having a large flux per 1 MPa of membrane surface effective pressure with a reverse osmosis membrane having a smaller flux, a removal rate for boron or silica can be improved while while the operational energy is reduced to some extent.

In the above inventions (Inventions 1 to 3), preferably, water quality of the water to be treated in the multi-stage reverse osmosis membrane treatment system includes a boron concentration of 1 to 500 μg/L and/or a silica concentration of 1 to 50 mg/L (Invention 4).

According to the above invention (Invention 4), by treating the water to be treated having the above boron concentration or silica concentration using the multi-stage reverse osmosis membrane treatment system, boron or silica in the treated water can be removed at a high level of 95% or more.

Effects of the Invention

According to the multi-stage reverse osmosis membrane treatment system of the disclosure, by using the first reverse osmosis membrane that has a much larger flux per 1 MPa of effective pressure than a general-purpose reverse osmosis membrane, it is possible to reduce the operational energy significantly (for example, by 20% or more) compared to the case where only reverse osmosis membranes having a smaller flux are combined. Furthermore, by adjusting the pH of water supplied to the first reverse osmosis membrane to the alkaline side for treatment, the removal rate for boron or silica can be maintained at or above a predetermined level. Accordingly, it is possible to provide a multi-stage reverse osmosis membrane treatment system which is reduced in operational energy and improved in water quality.

BRIEF DESCRIPTION OF THE DRAWINGS

FIG. 1 is a flow diagram showing a pure water production apparatus using a multi-stage reverse osmosis membrane treatment system according to a first embodiment of the disclosure.
FIG. 2 is a flow diagram showing a pure water production apparatus using a multi-stage reverse osmosis membrane treatment system according to a second embodiment of the disclosure.
FIG. 3 is a flow diagram showing a pure water production apparatus using a multi-stage reverse osmosis membrane treatment system according to a third embodiment of the disclosure.
FIG. 4 is a flow diagram showing a pure water production apparatus using a multi-stage reverse osmosis membrane treatment system of Comparative Example 1.
FIG. 5 is a flow diagram showing a pure water production apparatus using a multi-stage reverse osmosis membrane treatment system of Comparative Example 2.
FIG. 6 is a flow diagram showing a pure water production apparatus using a multi-stage reverse osmosis membrane treatment system of Comparative Example 3.

DESCRIPTION OF THE EMBODIMENTS

Hereinafter, a multi-stage reverse osmosis membrane treatment system of the disclosure will be described with reference to the accompanying drawings.

[First Embodiment]

(Pure Water Production Apparatus)

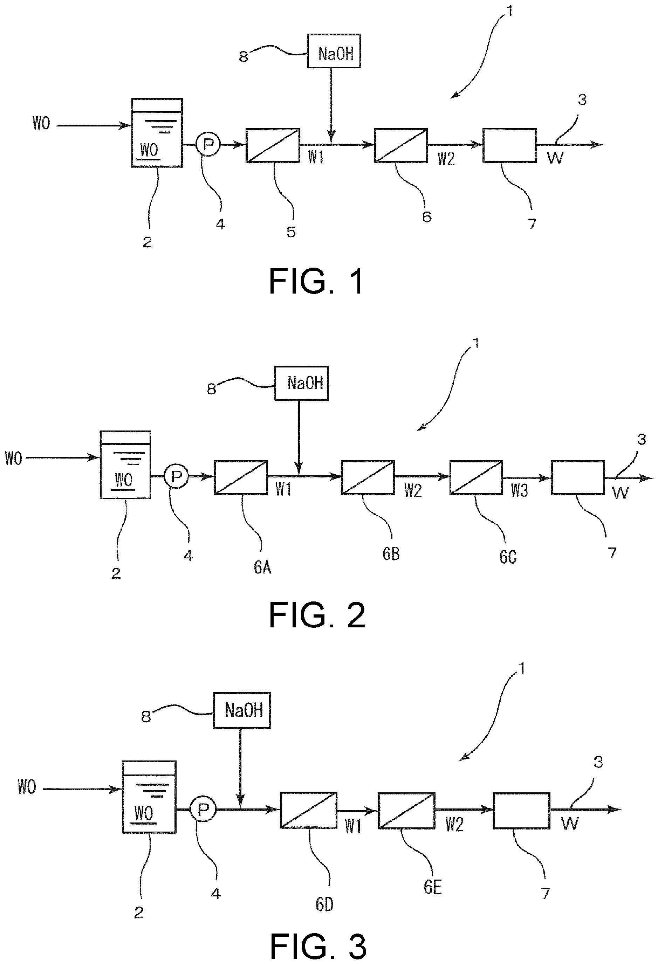

FIG. 1 shows a pure water production apparatus using a multi-stage reverse osmosis membrane treatment system according to a first embodiment of the disclosure. In FIG. 1, a pure water production apparatus 1 includes a retention tank 2 retaining water to be treated WO as raw water, and water-flow piping 3 connected to the retention tank 2. The water-flow piping 3 is provided with a liquid-sending pump 4, a second reverse osmosis membrane 5, a first reverse osmosis membrane 6, and an ion exchange device 7 in this order. An NaOH aqueous solution addition section 8 as an alkali addition mechanism is connected in a stage preceding the first reverse osmosis membrane 6. By a control mechanism (not illustrated), the amount of NaOH aqueous solution added can be controlled in accordance with a flow rate of the water-flow piping 3 and the pH of the water to be treated WO such that water to be treated by the first reverse osmosis membrane 6 is in an alkaline region. The multi-stage reverse osmosis membrane treatment system is composed of the second reverse osmosis membrane 5, the first reverse osmosis membrane 6, and the NaOH aqueous solution addition section 8.

(Reverse Osmosis Membrane)

In the present specification, a first to third reverse osmosis membranes respectively have abilities as described below. There exist reverse osmosis membranes having a smaller flux per 1 MPa of membrane surface effective pressure than the first to third reverse osmosis membranes, and these are general reverse osmosis membranes.

<First Reverse Osmosis Membrane>

·Having a flux of 0.6 $m^3/(m^2 \cdot day)$ or more under the conditions of a membrane surface effective pressure of 0.3 MPa (water temperature: 25 °C; pure water (RO permeated water)), and having a flux of 2.0 $m^3/(m^2 \cdot day)$ or more per 1 MPa of membrane surface effective pressure (water temperature: 25 °C; pure water (RO permeated water))
·Salt removal rate: 95% or more (membrane surface effective pressure: 0.3 MPa (water temperature: 25 °C; water supply: 500 mg/L at NaCl)
·IPA removal rate: 60% or more (membrane surface effective pressure: 0.3 MPa (water temperature: 25 °C; water supply: 500 mg/L at IPA)

<Second Reverse Osmosis Membrane>

• Having a flux of 0.6 $m^3/(m^2 \cdot day)$ or more under the conditions of a membrane surface effective pressure of 0.75 MPa (water temperature: 25 °C; pure water (RO permeated water)), and having a flux of 0.8 or more and less than 2.0 $m^3/(m^2 \cdot day)$ per 1 MPa of membrane surface effective pressure (water temperature: 25 °C; pure water (RO permeated water))
• Salt removal rate: 98% or more (membrane surface effective pressure: 0.75 MPa (water temperature: 25 °C, water supply: 500 mg/L at NaCl)
• IPA removal rate: 80% or more (membrane surface effective pressure: 0.75 MPa (water temperature: 25 °C; water supply: 500 mg/L at IPA)

<Third Reverse Osmosis Membrane>

·Having a flux of 0.6 $m^3/(m^2 \cdot day)$ or more under the conditions of a membrane surface effective pressure of 2.0 MPa (water temperature: 25 °C; pure water (RO permeated water)), and having a flux of 0.3 or more and less than

0.8 m$^3$/(m$^2$·day) per 1 MPa of membrane surface effective pressure (water temperature: 25 °C; pure water (RO permeated water))

·Salt removal rate: 99% or more (membrane surface effective pressure: 2.0 MPa (water temperature: 25 °C, water supply: 500 mg/L at NaCl)

·IPA removal rate: 90% or more (membrane surface effective pressure: 2.0 MPa (water temperature: 25 °C; water supply: 500 mg/L at IPA)

(Ion Exchange Device)

In the present embodiment, the ion exchange device 7 is not particularly limited if it has the ability to remove ionic components (anions and cations) from water to be treated. As the ion exchange device 7, an electrodeionization (EDI) device, a regenerative ion exchange device, a non-regenerative mixed bed ion exchange device or the like can be used. In the present embodiment, a regenerative ion exchange device is used.

(Operation Method of Pure Water Production Apparatus)

An operation method of the pure water production apparatus as described above will be described below. First, the liquid-sending pump 4 is driven to supply the water to be treated WO retained in the retention tank 2 to the second reverse osmosis membrane 5. In the treatment of the present embodiment, the water to be treated WO preferably has a boron concentration of 1 to 500 μg/L and/or a silica concentration of 1 to 50 mg/L. Ionic impurities are removed to some extent by the second reverse osmosis membrane 5, and primary treated water W1 is obtained. A water supply pressure of the water to be treated WO from the liquid-sending pump 4 at this time may be set based on a configuration of the reverse osmosis membrane and a desired flux.

For example, as the second reverse osmosis membrane 5, a reverse osmosis membrane having a flux of 1.0 m$^3$/(m$^2$·day) under the conditions of a membrane surface effective pressure of 0.75 MPa (water temperature: 25 °C; pure water (RO permeated water)) and having a flux of 1.00 m$^3$/(m$^2$·day) per 1 MPa (water temperature: 25 °C; pure water (RO permeated water)) of membrane surface effective pressure is used; as the first reverse osmosis membrane 6, a reverse osmosis membrane having a flux of 0.76 m$^3$/(m$^2$·day) or more under the conditions of a membrane surface effective pressure of 0.3 MPa (water temperature: 25 °C; pure water (RO permeated water)) and having a flux of 2.53 m$^3$/(m$^2$·day) per 1 MPa (water temperature: 25 °C; pure water (RO permeated water)) of membrane surface effective pressure is used. When water is passed through the second reverse osmosis membrane 5 and the first reverse osmosis membrane 6 at a flux of 1.00 m$^3$/(m$^2$·day), it is sufficient if the water supply pressure from the liquid-sending pump 4 is approximated to the sum of the respective membrane surface effective pressures at the flux. Specifically, since the membrane surface effective pressure of the second reverse osmosis membrane 5 at a flux of 1.00 m$^3$/(m$^2$·day) is 0.75 MPa, and the membrane surface effective pressure of the first reverse osmosis membrane 6 is 0.39 MPa, the water supply pressure may be set to 1.1 ($\approx$ 0.75 + 0.39) MPa.

Subsequently, an NaOH aqueous solution is added to the primary treated water W1 by the NaOH aqueous solution addition section 8, and the pH of the primary treated water W1 to be treated by the first reverse osmosis membrane 6 is adjusted to the alkaline side. Specifically, it is preferable that the pH of the primary treated water W1 is 8 to 11. By adjusting the pH of the primary treated water W1 to 8 to 11, a removal rate for weakly acidic ion species such as boron or silica that remain in the primary treated water W1 can be improved. By treatment with the first reverse osmosis membrane 6, remaining ionic impurities, particularly boron or silica, are removed, and secondary treated water W2 is obtained.

Furthermore, by treating the secondary treated water W2 with the ion exchange device 7 and further removing the remaining ionic impurities, pure water W can be produced.

According to such a multi-stage reverse osmosis membrane treatment system of the present embodiment, since the first reverse osmosis membrane 6 having a flux of 2.0 m$^3$/(m$^2$·day) or more per 1 MPa of effective pressure is used, and the pH of the primary treated water W1 to be treated by the first reverse osmosis membrane 6 is adjusted to the alkaline side, the removal rate for boron and silica in the resulting pure water W can be maintained at a high level (for example, 95% or more). The operational energy of the multi-stage reverse osmosis membrane treatment system is approximately proportional to the water supply pressure of the water to be treated WO from the liquid-sending pump 4, that is, an output of the liquid-sending pump 4, thus making it possible to compare the magnitudes of the operational energy. For example, under the same conditions as the setting of the water supply pressure from the liquid-sending pump 4 described above, if two stages of second reverse osmosis membranes are provided in series, the water supply pressure of the liquid-sending pump 4 theoretically becomes 1.5 ($\approx$ 0.75 × 2) MPa. Thus, a reduction rate of the operational energy becomes approximately 27% ((1.5 - 1.1)/1.5 × 100 $\approx$ 27).

[Second Embodiment]

(Pure Water Production Apparatus)

FIG. 2 shows a pure water production apparatus using a multi-stage reverse osmosis membrane treatment system according to a second embodiment of the disclosure. This pure water production apparatus basically has the same configurations as those of the first embodiment described above. Thus, the same configurations are assigned with the same reference numerals, and detailed description thereof will be omitted. The pure water production apparatus of the present embodiment has a configuration in which the water-flow piping 3 is provided with three stages of first reverse osmosis membranes 6A, 6B, and 6C in series, and the NaOH aqueous solution addition section 8 is provided in a stage preceding the first reverse osmosis membrane 6B in the second stage. The multi-stage reverse osmosis membrane treatment system is composed of the first reverse osmosis membranes 6A, 6B, 6C, and the NaOH aqueous solution addition section 8.

(Operation Method of Pure Water Production Apparatus)

An operation method of the pure water production apparatus as described above will be described below.
First, the liquid-sending pump 4 is driven to supply the water to be treated WO retained in the retention tank 2 to the first reverse osmosis membrane 6A. In the treatment of the present embodiment, the water to be treated WO preferably has a boron concentration of 1 to 500 $\mu$g/L and/or a silica concentration of 1 to 50 mg/L. Ionic impurities are removed to some extent by the first reverse osmosis membrane 6A, and the primary treated water W1 is obtained. The water supply pressure of the water to be treated WO from the liquid-sending pump 4 at this time may be set in consideration of the configuration of the reverse osmosis membranes 6A, 6B, and 6C. For example, when water is passed through the first reverse osmosis membranes 6A, 6B, and 6C at a flux of 1.00 $m^3/(m^2 \cdot day)$, as in the first embodiment described above, the water supply pressure may be set to 1.2 ($\approx 0.39 \times 3$) MPa based on the respective membrane surface effective pressures.
Next, an NaOH aqueous solution is added to the primary treated water W1 by the NaOH aqueous solution addition section 8, and the pH of the primary treated water W1 is adjusted to the alkaline side. Specifically, it is preferable that the pH of the primary treated water W1 is 8 to 11. By adjusting the pH of the primary treated water W1 to 8 to 11, a removal rate for weakly acidic ion species such as boron or silica that remain in the primary treated water W1 can be improved. By treating the primary treated water W1 with the first reverse osmosis membrane 6B in the second stage, remaining ionic impurities, particularly boron or silica, are removed, and the secondary treated water W2 is obtained. By treating the secondary treated water W2 with the first reverse osmosis membrane 6C in the third stage, the remaining ionic impurities are further removed, and tertiary treated water W3 is obtained.
Subsequently, by treating the tertiary treated water W3 with the ion exchange device 7 and further removing the remaining ionic impurities, the pure water W can be produced.
According to such a multi-stage reverse osmosis membrane treatment system of the present embodiment, since three stages of the first reverse osmosis membranes 6A, 6B, and 6C having a flux of 2.0 $m^3/(m^2 \cdot day)$ or more per 1 MPa of effective pressure under the conditions of a membrane surface effective pressure of 3 MPa (water temperature: 25 °C; pure water (RO permeated water)) are combined in series and the pH of the primary treated water W1 to be treated by the first reverse osmosis membrane 6B in the second stage is adjusted to the alkaline side, the removal rate for boron and silica in the resulting pure water W can be maintained at 95% or more. In comparison with the case where two stages of second reverse osmosis membranes are provided in series under the same conditions, for example, under the conditions set for the water supply pressure from the liquid-sending pump 4 described above, if two stages of second reverse osmosis membranes are provided in series, the water supply pressure of the liquid-sending pump 4 theoretically becomes 1.5 ($\approx 0.75 \times 2$) MPa. Thus, a reduction rate of the operational energy becomes approximately 20% (($1.5 - 1.2)/1.5 \times 100 \approx 20$).

[Third Embodiment]

(Pure Water Production Apparatus)

FIG. 3 shows a pure water production apparatus using a multi-stage reverse osmosis membrane treatment system according to a third embodiment of the disclosure. This pure water production apparatus basically has the same configurations as those of the first embodiment described above. Thus, the same configurations are assigned with the same reference numerals, and detailed description thereof will be omitted. The pure water production apparatus of the present embodiment has a configuration in which the water-flow piping 3 is provided with two stages of first reverse osmosis membranes 6D and 6E in series, and the NaOH aqueous solution addition section 8 as an alkali addition mechanism is provided in a stage preceding the first reverse osmosis membrane 6D in the first stage. The multi-stage reverse osmosis membrane treatment system is composed of the first reverse osmosis membranes 6D and 6E, and the NaOH aqueous solution addition section 8.

(Operation Method of Pure Water Production Apparatus)

An operation method of the pure water production apparatus as described above will be described below.

First, the liquid-sending pump 4 is driven to supply the water to be treated WO retained in the retention tank 2 to the first reverse osmosis membrane 6D. In the treatment of the present embodiment, the water to be treated WO preferably has a boron concentration of 1 to 500 μg/L and/or a silica concentration of 1 to 50 mg/L. The water supply pressure of the water to be treated WO from the liquid-sending pump 4 at this time may be set in consideration of the configuration of the reverse osmosis membranes 6D and 6E. For example, if water is passed through the first reverse osmosis membranes 6D and 6E at a flux of 1.00 m³/(m²·day), as in the first embodiment described above, the water supply pressure may be set to 0.8 ($\approx 0.39 \times 2$) MPa based on the respective membrane surface effective pressures.

At this time, an NaOH aqueous solution is added to the water to be treated WO from the NaOH aqueous solution addition section 8, and the pH of the water to be treated WO is adjusted to the alkaline side. Specifically, it is preferable that the pH of the water to be treated WO is 8 to 11. By adjusting the pH of the water to be treated WO to 8 to 11, a removal rate for weakly acidic ion species such as boron or silica present in the water to be treated WO can be improved. By treating the water to be treated WO with the first reverse osmosis membrane 6D in the first stage, remaining ionic impurities, particularly boron or silica, are removed, and the primary treated water W1 is obtained. By treating the primary treated water W1 with the second reverse osmosis membrane 6E in the third stage, the remaining ionic impurities are further removed, and the secondary treated water W2 is obtained.

Subsequently, by treating the secondary treated water W2 with the ion exchange device 7 and further removing the remaining ionic impurities, the pure water W can be produced.

According to such a multi-stage reverse osmosis membrane treatment system of the present embodiment, since only the first reverse osmosis membranes 6 having a flux of 2.00 m³/(m²·day) or more per 1 MPa of effective pressure under the conditions of a membrane surface effective pressure of 0.3 MPa (water temperature: 25 °C; pure water (RO permeated water)) are combined and the pH of the primary treated water W1 to be treated by the first reverse osmosis membrane 6D in the first stage is adjusted to the alkaline side, the removal rate for boron and silica in the resulting pure water W can be maintained at 95% or more. In comparison with the case where two stages of second reverse osmosis membranes are provided in series under the same conditions, for example, under the conditions set for the water supply pressure from the liquid-sending pump 4 described above, if two stages of second reverse osmosis membranes are provided in series, the water supply pressure of the liquid-sending pump 4 theoretically becomes 1.5 ($\approx 0.75 \times 2$) MPa. Thus, a reduction rate of the operational energy becomes approximately 47% ($(1.5 - 0.8)/1.5 \times 100 \approx 47$).

Although the disclosure has been described based on each of the above embodiments, the disclosure is not limited to the above embodiments and can be modified and implemented in various ways. For example, in the above embodiments, an example in which a first reverse osmosis membrane and a first reverse osmosis membrane are connected in series, and an example in which a second reverse osmosis membrane and a first reverse osmosis membrane are connected in series have been described. However, in the disclosure, in the multi-stage reverse osmosis membrane treatment system in which multiple stages of reverse osmosis membranes are connected in series, if a first reverse osmosis membrane is used as any reverse osmosis membrane and the pH of a liquid to be treated is adjusted to the alkaline side in a stage preceding the first reverse osmosis membrane, the first reverse osmosis membrane may be combined with a third reverse osmosis membrane.

Examples

The disclosure will be described below in more detail based on specific examples, but the disclosure is not limited to the following examples.

[Confirmation Test for Boron Removal Rate of Reverse Osmosis Membrane]

The following reverse osmosis membranes were used as the first reverse osmosis membrane to the third reverse osmosis membrane. A boron concentration was measured in the case where these reverse osmosis membranes alone were used to treat two types of water to be treated WO in which 500 μg/L of boron was added to pure water and the pH was adjusted, and a boron removal rate was calculated. The results are shown in Table 1 together with the membrane surface effective pressures and fluxes of the reverse osmosis membrane used.

[Table 1]

| Type of reverse osmosis membrane | Membrane surface effective pressure [MPa] | Flux (permeate flux) [m³/ (m²·day) at 25 °C] | Boron removal rate [%] | |
|---|---|---|---|---|
| | | | pH 6-7 | pH 11 |
| First reverse osmosis membrane | 0.3 | 0.76 | 20.0 | 94.0 |
| Second reverse osmosis membrane | 0.75 | 1.00 | 54.0 | 98.0 |
| Third reverse osmosis membrane | 2.0 | 0.83 | 88.0 | 99.8 |

[Example 1]

In the pure water production apparatus using the multi-stage reverse osmosis membrane treatment system shown in FIG. 1, the water to be treated WO in which 500 $\mu$g/L of boron was added to pure water was supplied so as to achieve a predetermined unit water content (flux = 1.0 m³/(m²·day) at 25 °C), the pH was adjusted to 11 in a stage preceding the first reverse osmosis membrane 6, and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Example 2]

In the pure water production apparatus using the multi-stage reverse osmosis membrane treatment system shown in FIG. 2, the water to be treated WO in which 500 $\mu$g/L of boron was added to pure water was supplied so as to achieve a predetermined unit water content (flux = 1.0 m³/(m²·day) at 25 °C), the pH was adjusted to 11 in a stage preceding the first reverse osmosis membrane 6B, and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Example 3]

In the pure water production apparatus using the multi-stage reverse osmosis membrane treatment system shown in FIG. 3, the water to be treated WO in which 500 $\mu$g/L of boron was added to pure water was supplied so as to achieve a predetermined unit water content (flux = 1.0 m³/(m²·day) at 25 °C), the pH was adjusted to 11 in a stage preceding the first reverse osmosis membrane 6D, and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Comparative Example 1]

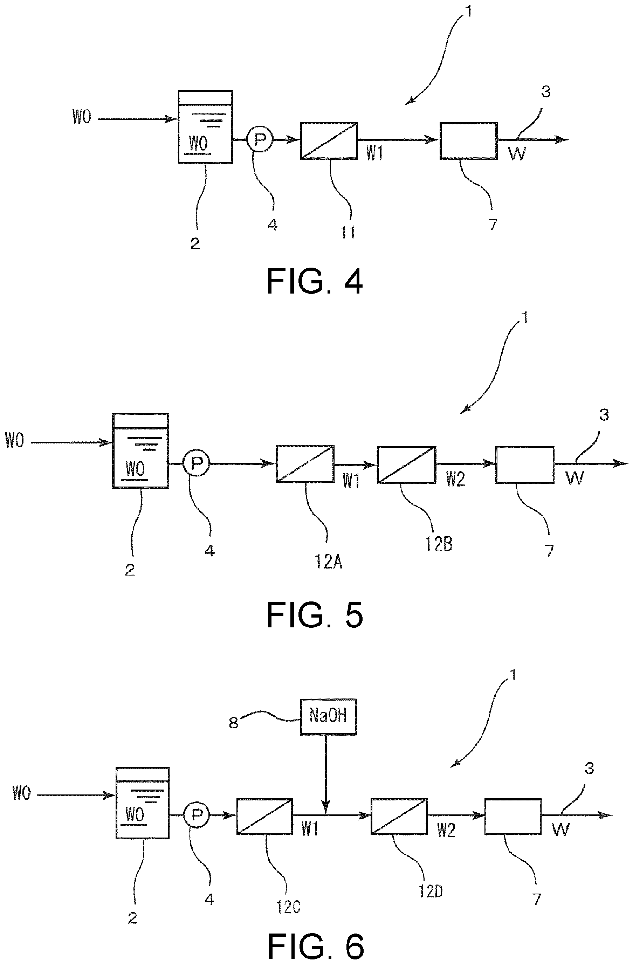

In a pure water production apparatus using a multi-stage reverse osmosis membrane treatment system shown in FIG. 4, the water to be treated WO (having a pH of 6 to 7) in which 500 $\mu$g/L of boron was added to pure water was supplied so as to achieve a predetermined unit water content (flux = 1.0 m³/(m²·day) at 25 °C), and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Comparative Example 2]

In a pure water production apparatus using a multi-stage reverse osmosis membrane treatment system shown in FIG. 5, the water to be treated WO (having a pH of 6 to 7) in which 500 $\mu$g/L of boron was added to pure water was supplied so as to achieve a predetermined unit water content (flux = 1.0 m$^3$/(m$^2$·day) at 25 °C), and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Comparative Example 3]

In a pure water production apparatus using the multi-stage reverse osmosis membrane treatment system shown in FIG. 6, the water to be treated WO in which 500 $\mu$g/L of boron was added to pure water was supplied so as to achieve a predetermined unit water content (flux = 1.0 m$^3$/(m$^2$·day) at 25 °C), the pH was adjusted to 11 in a stage preceding a second reverse osmosis membrane 12D, and the pure water production apparatus 1 was operated. The boron removal rate was calculated based on a measurement result of the boron concentration in a stage (outlet of the reverse osmosis membrane in the last stage) preceding the ion exchange device 7 at this time. The result is shown in Table 2 together with the flux, and the membrane surface effective pressure required to obtain the equivalent flux.

[Table 2]

| Example No. | Flux [m$^3$/(m$^2$·day) at 25 °C] | Membrane surface effective pressure [MPa] required to obtain equivalent flux | Boron removal rate [%] |
|---|---|---|---|
| Example 1 | 1.0 | 1.1 | 97.2 |
| Example 2 | 1.0 | 1.2 | 99.7 |
| Example 3 | 1.0 | 0.8 | 99.6 |
| Comparative Example 1 | 1.0 | 2.4 | 88.0 |
| Comparative Example 2 | 1.0 | 1.5 | 78.8 |
| Comparative Example 3 | 1.0 | 1.5 | 99.1 |

As is clear from Table 2, according to the multi-stage reverse osmosis membrane treatment systems of Examples 1 to 3, operation was possible at a membrane surface effective pressure of less than 1.5 MPa; moreover, a high boron removal rate of 99% or more was able to be maintained. The membrane surface effective pressure is approximately proportional to the output (operational energy) of the pump 4. That is, in a comparison between Example 2 which is an example having the highest membrane surface effective pressure and Comparative Example 3 which is a comparative example having the lowest membrane surface effective pressure and the highest boron removal rate, in contrast to Comparative Example 3 in which the membrane surface effective pressure was 1.5 MPa, the membrane surface effective pressure in Example 2 was 1.2 MPa. Hence, it is known that the operational energy can be reduced by 20% according to the following calculation.

$$\text{Operational energy reduction rate} = (1.5 - 1.2)/1.5 \times 100 = 20\ (\%)$$

Description of Reference Numerals

1: pure water production apparatus
2: retention tank
3: water-flow piping
4: liquid-sending pump
5: second reverse osmosis membrane
6, 6A, 6B, 6C, 6D, 6E: first reverse osmosis membrane
7: ion exchange device

8: NaOH aqueous solution addition section (alkali addition mechanism)
WO: treated water
W1: primary treated water
W2: secondary treated water
W3: tertiary treated water
W: pure water

**Claims**

1. A multi-stage reverse osmosis membrane treatment system, in which two or more stages of reverse osmosis membranes are arranged in series, wherein at least one of the two or more stages of reverse osmosis membranes is a reverse osmosis membrane (hereinafter first reverse osmosis membrane) having a flux of 2.0 $m^3/(m^2 \cdot day)$ or more per 1 MPa (water temperature: 25 °C; pure water (RO permeated water)) of membrane surface effective pressure, and pH of water to be treated by the first reverse osmosis membrane is adjusted to an alkaline side for treatment.

2. The multi-stage reverse osmosis membrane treatment system according to claim 1, wherein two stages of the first reverse osmosis membrane are arranged in series, and the pH of the water to be treated by any of the first reverse osmosis membranes is adjusted to the alkaline side for treatment.

3. The multi-stage reverse osmosis membrane treatment system according to claim 1, wherein a reverse osmosis membrane (hereinafter second reverse osmosis membrane) having a flux of 0.8 $m^3/(m^2 \cdot day)$ or more per 1 MPa (water temperature: 25 °C; pure water (RO permeated water)) of membrane surface effective pressure and the first reverse osmosis membrane are arranged in series, and the pH of the water to be treated by the first reverse osmosis membrane is adjusted to the alkaline side for treatment.

4. The multi-stage reverse osmosis membrane treatment system according to any one of claims 1 to 3, wherein water quality of the water to be treated in the multi-stage reverse osmosis membrane treatment system comprises a boron concentration of 1 to 500 $\mu$g/L and/or a silica concentration of 1 to 50 mg/L.

FIG. 1

FIG. 2

FIG. 3

FIG. 4

FIG. 5

FIG. 6

## INTERNATIONAL SEARCH REPORT

| International application No. |
| --- |
| **PCT/JP2022/034165** |

**A. CLASSIFICATION OF SUBJECT MATTER**

*C02F 1/44*(2023.01)i; *B01D 61/02*(2006.01)i; *B01D 61/08*(2006.01)i; *B01D 61/58*(2006.01)i
FI:  C02F1/44 A; B01D61/02 500; B01D61/08; B01D61/58

According to International Patent Classification (IPC) or to both national classification and IPC

**B. FIELDS SEARCHED**

Minimum documentation searched (classification system followed by classification symbols)
C02F1/44; B01D61/00-71/82

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-290275 A (TORAY IND INC) 11 November 1997 (1997-11-11)<br>claim 1, paragraphs [0011]-[0043], fig. 1 | 1-4 |
| A | JP 2001-145879 A (KURITA WATER IND LTD) 29 May 2001 (2001-05-29) | 1-4 |
| A | WO 2020/184045 A1 (ORGANO CORPORATION) 17 September 2020 (2020-09-17) | 1-4 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2022** | **08 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/034165**

| Patent document cited in search report | | | Publication date (day/month/year) | Patent family member(s) | | | Publication date (day/month/year) |
|---|---|---|---|---|---|---|---|
| JP | 9-290275 | A | 11 November 1997 | (Family: none) | | | |
| JP | 2001-145879 | A | 29 May 2001 | (Family: none) | | | |
| WO | 2020/184045 | A1 | 17 September 2020 | US | 2022/0162104 | A1 | |
| | | | | CN | 113573799 | A | |
| | | | | JP | 2020-146619 | A | |
| | | | | TW | 202039060 | A | |

Form PCT/ISA/210 (patent family annex) (January 2015)

**EP 4 431 465 A1**

**Patent documents cited in the description**

- JP 2018079451 A